# EUROPÄISCHE PATENTSCHRIFT

(11) **EP 3 059 103 B1**
(45) Veröffentlichungstag und Bekanntmachung des Hinweises auf die Patenterteilung: **28.03.2018**
(21) Anmeldenummer: 16159208.4
(22) Anmeldetag: 24.11.2012
(51) Int. Cl.: B60D 1/36, B60D 1/62

(54) **STEUERGERÄT FÜR EINE ANHÄNGEKUPPLUNG UND DAMIT AUSGESTATTETE ANHÄNGEKUPPLUNG**
CONTROL DEVICE FOR A TRAILER COUPLING AND TRAILER COUPLING EQUIPPED WITH SAME
APPAREIL DE COMMANDE POUR UN ATTELAGE ET ATTELAGE EN ETANT EQUIPE

(30) Priorität: 09.12.2011 DE 102011120649
(43) Veröffentlichungstag der Anmeldung: 24.08.2016
(62) Teilanmeldung aus: 12007933.0
(73) Patentinhaber: WESTFALIA - Automotive GmbH, 33378 Rheda-Wiedenbrück (DE)
(72) Erfinder: Beutin, Jörg, 33334 Gütersloh (DE); Röscheisen, Daniel, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 2 018 981
- EP-A2- 1 312 492
- US-A1- 2011 241 856
- US-B1- 7 746 219

## Beschreibung

Die Erfindung betrifft ein Steuergerät für eine Anhängekupplung gemäß dem Oberbegriff des Anspruchs 1. Die Erfindung betrifft ferner eine mit dem Steuergerät ausgestattete Anhängekupplung, wobei die Anhängekupplung einen Kupplungsarm zum Anhängen eines Anhängers oder zum Halten eines Lastenträgers aufweist.

Eine derartiges Steuergerät ist beispielsweise aus
EP 2 018 981 A1 bekannt.

Aus DE 36 17 426 A1 ist es bekannt, beispielsweise mittels einem oder mehreren Dehnungsmessstreifen am Kupplungsarm die Stützlast des Anhängers zu erfassen. Somit kann also mit erheblichem Aufwand zumindest eine Größe des Anhängers identifiziert werden, nämlich dessen Stützlast, die auf dem Kupplungsarm lastet.

Anhängekupplungen mit Steuergeräten, beispielsweise um einen Verriegelungsantrieb oder einen Stellantrieb für den Kupplungsarm anzusteuern, sind allgemein bekannt. Für die Betriebssicherheit ist es wichtig, dass nur eine autorisierte Person den jeweiligen Antrieb betätigen darf, so dass beispielsweise nicht in unerlaubter Weise die Verriegelung des Kupplungsarms durch Dritte gelöst werden kann. Die Identifikation eines autorisierten Bedieners ist nur mit erheblichem Aufwand zu lösen.

Es ist daher die Aufgabe der vorliegenden Erfindung, ein Steuergerät und eine mit dem Steuergerät ausgestattete Anhängekupplung bereitzustellen, bei dem bzw. der eine erleichterte Identifizierung möglich ist.

Zur Lösung der Aufgabe ist ein Steuergerät gemäß der technischen Lehre des Anspruchs 1 vorgesehen.

Ein Grundgedanke der Erfindung ist es, dass das Steuergerät bzw. die mit dem Steuergerät ausgestattete Anhängekupplung mit geringem Aufwand den Lastenträger, einen Anhänger oder auch einen Bediener identifizieren kann. Die RFID-Leseeinrichtung ermöglicht es, einen beispielsweise an einem Schlüsselanhänger angeordneten RFID-Transponder einzulesen und somit den Bediener zu identifizieren. Auch ein Anhänger oder Lastenträger kann auf diesem Wege sehr einfach identifiziert werden, beispielsweise um daraus weitere Funktionen und somit einen Mehrwert der Anhängekupplung zu generieren. Der RFID-Transponder kann geschützt untergebracht sein, beispielsweise auch in ein Leichtmetall-Bauteil des Lastenträgers oder des Anhängers eingegossen sein. Dabei ist es ein besonderer Vorteil, dass die RFID-Leseeinrichtung nahe beim zu lesenden RFID-Transponder sein kann, beispielsweise direkt am oder im Kupplungsarm oder im oder am Kuppelelement, beispielsweise einer Kupplungskugel oder dergleichen, das am Kupplungsarm angeordnet ist. Damit ist die Wahrscheinlichkeit gering, dass Lesefehler auftreten. Vielmehr ist die Kommunikation zwischen der RFID-Leseeinrichtung und dem RFID-Transponder optimal.

Das Steuergerät bildet vorzugsweise zwar eine steuernde Komponente und gibt beispielsweise Steuersignale aus. Es kann aber auch lediglich als eine Auswerteeinrichtung, die zumindest die mindestens eine Identifikationskennung auswertet, ausgestaltet sein.

Es ist selbstverständlich auch möglich, dass der RFID-Transponder nachgerüstet wird, beispielsweise nachträglich an die Anhängekupplung oder den Lastenträger angeklebt oder angeschraubt wird. Selbstverständlich ist es in jedem Fall vorteilhaft, wenn der RFID-Transponder in einem Schutzgehäuse untergebracht ist, beispielsweise vergossen ist.

So kann beispielsweise bei dem Steuergerät ein Datenausgang zur Ausgabe eines die Identifikationskennung enthaltenden oder in Abhängigkeit von der mindestens einen Identifikationskennung erzeugten Meldesignals vorgesehen sein. Somit kann das Steuergerät beispielsweise die Identifikationskennung und/oder mit der Identifikationskennung zusammenhängende Daten als das Meldesignal ausgeben, beispielsweise an einem Display.

Eine besonders bevorzugte Variante der Erfindung sieht vor, dass der Datenausgang eine Bordnetz-Schnittstelle aufweist, die eine Verbindung zu einem Bordnetz des Zugfahrzeugs ermöglicht. Das Bordnetz kann beispielsweise ein Datenbus sein, zum Beispiel ein CAN-Bus oder dergleichen, wofür dann die Bordnetz-Schnittstelle des Steuergeräts ausgestaltet ist, beispielsweise eine CAN-Schnittstelle umfasst.

In dem Meldesignal kann, wie gesagt insbesondere die Identifikationskennung übertragen werden. Es ist aber auch möglich, dass das Meldesignal die Identifikationskennung sowie weitere, mit der Identifikationskennung verknüpfte Informationen enthält, beispielsweise Gewicht des Lastenträgers oder des Anhängers, Länge oder Breite oder sonstige geometrische Maße des Lastenträgers oder des Anhängers. Insbesondere in Bezug auf die Fahrstabilität des Gespanns aus Zugfahrzeug und Anhänger ist auch wesentlich, welche Anzahl von Achsen der Anhänger aufweist, beispielsweise ob es sich um einen einachsigen oder mehrachsigen Anhänger handelt. Das Meldesignal enthält daher vorzugsweise auch einen Anzahlwert für die Anzahl der Achsen des Anhängers. Auch die maximale Belastung, die der Anhänger aufweisen darf, kann im Zusammenhang mit dem Meldesignal oder in dem Meldesignal von dem Steuergerät an das Bordnetz übertragen werden.

Das Zugfahrzeug kann diese Informationen beispielsweise im Zusammenhang mit einer Einparkassistenzfunktion nutzen, beispielsweise geometrische Daten des Lastenträgers oder des Anhängers. Beispielsweise können auch Abstandssensoren in Abhängigkeit von dem angekuppelten Lastenträger auf die veränderte Situation eingestellt werden, so dass sie beispielsweise aufgrund des Lastenträgers früher vor dem Aufprall auf ein Hindernis warnen als ohne an dem Zugfahrzeug montierten Lastenträger. Auch beispielsweise ein elektronisches Fahrstabilisierungsprogramm kann anhand der so vom Steuergerät erhaltenen Daten besser seine Funktion der Stabilisierung des Gespanns aus Zugfahrzeug und Anhänger oder des Gefährts bestehend aus Zugfahrzeug und Lastenträger realisieren.

Es ist möglich, dass die Leseeinrichtung neben der Identifikationskennung auch weitere Daten aus dem RFID-Transponders ausliest, beispielsweise die vorgenannte geometrischen Daten des Lastenträgers oder Anhängers. Neben der Identifikationskennung werden diese Daten dann vom RFID-Transponder zum Steuergerät übertragen, welches die Daten dann auswertet, beispielsweise an das Bordnetz des Zugfahrzeugs weiterleitet.

Eine andere, bevorzugte Variante sieht vor, dass das Steuergerät einen Speicher aufweist, in dem der mindestens einen Identifikationskennung zugeordnete Daten abgelegt sind und dass es zur Erzeugung eines Meldesignals oder eine Steuersignals in Abhängigkeit von der mindestens eine Identifikationskennung und mindestens einer in dem Speicher abgelegten Information ausgestaltet ist. In dem Speicher sind also dem jeweiligen Anhänger oder Anhängertyp bzw. Lastenträger oder Lastenträgertyp zugeordnete Informationen gespeichert, beispielsweise Gewicht, Größe und dergleichen. Das Steuergerät ist in der Lage, diese Daten der Identifikationskennung zuzuordnen und beispielsweise in dem Meldesignal an das Bordnetz des Zugfahrzeugs zu übertragen. Es ist auch möglich, dass beispielsweise Steuerfunktionen anhand dieser Daten besser realisiert werden, d.h. dass beispielsweise die Verriegelung des Kupplungsarms mit größerer Kraft betätigt wird, wenn ein schwererer Anhänger gezogen wird oder ein schwererer Lastenträger auf dem Kupplungsarm lastet.

Der Speicher kann ein Dauerspeicher sein, das heißt dass die in ihm abgelegten Daten beispielsweise schon im Werk eingespeichert werden. Bevorzugt ist jedoch ein parametrierbarer Speicher bzw. ein parametrierbares Steuergerät. Beispielsweise hat das Steuergerät einen Parametriereingang, über den es parametrierbar ist.

Das Steuergerät hat erfindungsgemäß einen Schaltausgang zum Schalten oder Steuern eines Antriebs der Anhängekupplung, beispielsweise eines Verriegelungsantriebs zum Verriegeln des Kupplungsarms und/oder zum Entriegeln des Kupplungsarms oder eines Stellantriebs zum Verstellen des Kupplungsarms, beispielsweise zwischen einer Arbeitsstellung, die zum Ankuppeln eines Anhängers oder Lastenträgers dient, und einer zur Karosserie des Zugfahrzeugs hin verstellten Ruhestellung, in die der Kupplungsarm bei Nichtgebrauch zweckmäßigerweise verstellt ist. In der Ruhestellung befindet sich der Kupplungsarm beispielsweise hinter einem Stoßfänger des Zugfahrzeugs. Die Steuerung erfolgt in diesem Fall zweckmäßigerweise in Abhängigkeit von der mindestens einen Identifikationskennung, d.h. dass das Steuergerät beispielsweise einen Verriegelungsantrieb häufiger in Richtung einer Verstellung in die Verriegelungsstellung ansteuert, wenn ein schwerer Anhänger gezogen wird, der den Kupplungsarm aus seiner Verriegelung heraus bewegen könnte. Wenn nur ein leichter Lastenträger befestigt ist, genügt beispielsweise ein seltenes Nachtakten oder gar kein Nachtakten.

Im Zusammenhang mit der Entriegelung oder Verriegelung des Kupplungsarms oder dessen Verstellung zwischen beispielsweise einer Ruhestellung und der Arbeitsstellung kann die RFID-Leseeinrichtung auch noch eine Identifikation bzw. Sicherheitsfunktion erfüllen, die einem an sich eigenständigen Erfindungsgedanken darstellt. Beispielsweise bildet das Steuergerät einen Bestandteil eines Systems, bei dem das Steuergerät mittels eines Schalters, zum Beispiel eines Drucktasters, eines Funk-Schalters oder eines sonstigen drahtlosen Schalters betätigbar ist, um beispielsweise den Kupplungsarm zu entriegeln oder zu verriegeln oder ihn zu verstellen.

In Abhängigkeit von einem Erkennen des RFID-Transponders, beispielsweise dem Erkennen der Identifikationskennung des Transponders, erzeugen die Auswertemittel ein Freigabesignal zur Freigabe einer Betätigung des Verriegelungsantriebs und/oder des Stellantriebs. Wenn also das Steuergerät gleichzeitig oder in engem zeitlichem Zusammenhang den RFID-Transponder erkennt, öffnet es ein Zeitfenster, innerhalb dessen der Schalter betätigbar ist bzw. innerhalb dessen die Betätigung des Schalters den Verriegelungsantrieb oder den Stellantrieb ansteuert. Nur wenn das Steuergerät eine korrekte bzw. autorisierte Identifikationskennung erkennen kann, ist das Steuergerät zum Stellen bzw. Schalten des Verriegelungsantriebs oder des Stellantriebs bereit.

Insbesondere in diesem Zusammenhang (aber auch bei einem zu identifizierenden Lastenträger oder Anhänger) ist es auch vorteilhaft, dass die Leseeinrichtung zweckmäßigerweise nur in einem engen, kurzen Abstand mit dem Transponder kommuniziert, das heißt dass eine Betätigung des Verriegelungsantriebs oder des Stellantriebs nur dann möglich ist, wenn der Transponder in der Nähe des Steuergeräts bzw. der Leseeinrichtung ist. Wenn sich der Bediener abseits befindet, der Transponder also weit von dem Steuergerät bzw. des Leseeinrichtung entfernt ist (z.B. mehr als einen Meter oder vorzugsweise mehr als 50 cm), ist die Anhängekupplung quasi nicht bedienbar. Der Vorteil dieser Technologie ist es, dass sie auch leicht nachrüstbar ist, das heißt dass beispielsweise am Zugfahrzeug selbst keine oder nur geringe Modifikationen notwendig sind. Die Sicherheit oder die Bediensicherheit sind dadurch gewährleistet, dass das Steuergerät mit seiner Leseeinrichtung den RFID-Transponder erfasst und in Abhängigkeit von der so ermittelten Identifikationskennung Bedienhandlungen zulässt bzw. steuert. Somit bildet die Identifikationskennung sozusagen eine Sicherheitskennung. Es ist eine redundante und sichere Abfrage der Startbedingung für beispielsweise eine Entriegelung oder ein Verstellen des Kupplungsarms gegeben.

Der RFID-Transponder kann beispielsweise an einem Schlüsselanhänger für einen Fahrzeug-Schlüssel des Zugfahrzeugs angeordnet sein. Es ist auch möglich, den Transponder direkt im Fahrzeug-Schlüssel anzuordnen oder in diesem zu vorzusehen.

Das Steuergerät umfasst zweckmäßigerweise auch eine Auswerteeinrichtung oder Auswertemittel für ein Sensorsignal, beispielsweise eines Drehwinkelsensors, eines Stützlastsensors, eines Zugkraftsensors oder dergleichen. Das Drehwinkelsensorsignal des Drehwinkelsensors dient beispielsweise zur Erfassung einer Winkelstellung des Anhängers relativ zu dem Kupplungsarm bzw. dem Zugfahrzeug. Vorteilhaft ist dabei, wenn das Steuergerät das Sensorsignal in Abhängigkeit von der mindestens einen Identifikationskennung auswertet oder modifiziert oder auch ausgibt. So kann beispielsweise vorgesehen sein, dass das Drehwinkel-Signal bei einem Lastenträger anders zu werten ist als bei einem an die Anhängekupplung angekuppelten Anhänger. Wenn das Steuergerät beispielsweise anhand der Identifikationskennung erfasst hat, dass an den Kupplungsarm ein Lastenträger angekuppelt ist, darf sich das Drehwinkel-Signal an sich nicht ändern. Wenn der Drehwinkel über ein vorbestimmtes Maß geändert ist, bedeutet dies, dass der Lastenträger beispielsweise nicht mehr in der korrekten Stellung an dem Kupplungsarm befestigt ist, was ein Sicherheitsrisiko darstellt. Dies kann das Steuergerät beispielsweise an das Bordnetz melden, d.h. ein entsprechendes Meldesignal generieren. Auf der anderen Seite kann auch einen Drehwinkel-Signal eine geringe, unkritische Wanderungsbewegung haben. Wenn also das Steuergerät eine solche geringe Verstellung des Drehwinkels erkennt, die bei einem Lastenträger unkritisch ist, bleibt es quasi ruhig, informiert das Zugfahrzeug bzw. das Bordnetz desselben nicht.

Es ist auch möglich, dass die Anhängekupplung eine Bremseinrichtung oder Blockiereinrichtung zum Bremsen oder Blockieren einer Relativbewegung einer an den Kupplungsarm angreifenden Last aufweist. Beispielsweise ist es möglich, dass der Kuppelkörper, insbesondere Kugelkopf, drehbar am Kupplungsarm gelagert ist. Wenn jedoch ein Lastenträger an diesem Kuppelkopf befestigt ist, soll sich der Kugelkopf nicht drehen. Das Steuergerät ist zweckmäßigerweise zur Ansteuerung der Bremseinrichtung oder Blockiereinrichtung zum Bremsen oder Blockieren in Abhängigkeit von der mindestens einen Identifikationskennung ausgestaltet, insbesondere wenn die Identifikationskennung einen Lastenträger anzeigt bzw. einem Lastenträger zugeordnet ist. Wenn jedoch die Identifikationskennung einem Anhänger zugeordnet ist, lässt das Steuergerät die Relativbewegung des Anhängers zum Kupplungsarm zu.

Es versteht sich, dass zwar zweckmäßigerweise die RFID-Leseeinrichtung direkt am oder im Gehäuse der Steuereinrichtung bzw. des Steuergeräts angeordnet ist. Somit sind die Wege zum Beispiel zu einem Mikroprozessor oder sonstigen Komponenten des Steuergeräts kurz. Zudem kann die Leseeinrichtung geschützt, beispielsweise im Gehäuse, untergebracht sein. Im Rahmen der Erfindung liegt es aber auch, dass die RFID-Leseeinrichtung eine gesonderte, vorzugsweise frei positionierbar Baueinheit bildet. Beispielsweise kann die Leseeinrichtung am Kupplungsarm oder einer Halterung zum Halten des Kupplungsarms angeordnet sein. Es ist auch möglich, dass die Leseeinrichtung direkt im Kuppelkörper, beispielsweise einem Kugelkopf, der Anhängekupplung angeordnet ist, so dass ein kurzer, die Kommunikation erleichternder Abstand zwischen Leseeinrichtung und Transponder vorhanden ist. Wenn die Leseeinrichtung abseits eines Gehäuses des Steuergeräts angeordnet ist, kann sie mit den übrigen Komponenten des Steuergeräts beispielsweise über eine Leitungsverbindung oder auch drahtlos, zum Beispiel über Funk, mittels Lichtsignal oder dergleichen, kommunizieren.

Eine erfindungsgemäße Anhängekupplung hat vorteilhaft eine an einem Kraftfahrzeug angeordnete oder anordenbare Halterung, an der ein Kupplungsarm mit einem Kuppelelement zum Eingriff in eine Kupplungsaufnahme einer Kupplung eines Anhängers mittels einer Lageranordnung beweglich gelagert ist, wobei der Kupplungsarm in einer Gebrauchsstellung nach hinten vor das Kraftfahrzeug zum Ankuppeln des Anhängers vorsteht.

Bei dieser Anhängekupplung ist vorteilhaft vorgesehen, dass die Lageranordnung im Bereich der Gebrauchsstellung mindestens einen Schwenkfreiheitsgrad und/oder mindestens einen Linear-Verstellfreiheitsgrad zu einer Verstellung des Kupplungsarms zu einer Positionierung des Kuppelelements zu der Kupplungsaufnahme aufweist.

Bei dieser Anhängekupplung ist weiter vorteilhaft vorgesehen, dass sie eine Positionierantriebanordnung zum Antreiben des Kupplungsarms und Positionieren des Kuppelelements in die Kupplungsaufnahme des Anhängers aufweist.

Zwar wäre es prinzipiell bei einer Variante der Erfindung möglich, dass die Positionierantriebanordnung einen oder mehrere manuelle Antriebe, beispielsweise eine Kurbel und/oder einen Seilzug oder dergleichen umfasst.

Bevorzugt ist ein motorisches Konzept, bei dem die Positionierantriebanordnung einen oder mehrere Motoren, beispielsweise Elektromotoren, pneumatische Antriebe, hydraulische Antriebe oder dergleichen andere fluidische Antriebe umfasst. Die Positionierantriebanordnung kann selbstverständlich auch eines oder mehrere Getriebe, beispielsweise Zahnradgetriebe, Seilzuggetriebe, Keilgetriebe oder dergleichen, einen Reibradantrieb oder dergleichen umfassen. Weiterhin kann ein Antriebsmotor der Positionierantriebanordnung über eine Getriebeanordnung mehrere Antriebsachsen antreiben.

Bevorzugt umfasst die Lageranordnung mindestens ein Kugellager oder wird durch ein Kugellager gebildet. Die Lageranordnung kann selbstverständlich verschiedenartige Lager umfassen, beispielsweise mindestens ein Linearlager und/oder mindestens ein Kugellager und/oder mindestens ein Schwenklager oder dergleichen. Es versteht sich, dass auch andere Lagerkonzepte der Lageranordnung, beispielsweise Schiebelager und/oder Schwenk-Schiebelager und/oder mindestens ein Drehlager, insbesondere mehrere Drehlager mit zueinander winkeligen Drehachsen, und/oder kardanische Lagerungen oder dergleichen ohne weiteres möglich sind.

Eine bevorzugte Ausführungsform sieht vor, dass der Kupplungsarm mittels der Lageranordnung beweglich zwischen der Gebrauchsstellung sowie auch einer Nichtgebrauchsstellung gelagert ist. Der Kupplungsarm ist in der Nichtgebrauchsstellung zum Fahrzeug hin verstellt, beispielsweise verborgen hinter einen Stoßfänger zurück verstellt. Somit hat also die Lageranordnung nicht nur die Funktion, das Kuppelelement, insbesondere eine Kupplungskugel, in einer Ausgestaltung der Erfindung in der oder in die Kupplungsaufnahme des Anhängers zu positionieren, sondern ermöglicht in vorteilhafter Weise, den Kupplungsarm bei Nichtgebrauch so zu verstellen, dass er nicht mehr stört, insbesondere die Bodenfreiheit des Kraftfahrzeugs nicht behindert.

Nachfolgend werden Ausführungsbeispiele der Erfindung anhand der Zeichnung erläutert. Es zeigen:
- Figur 1: eine Querschnittsansicht einer ersten Anhängekupplung, an die eine Zugkupplung angekuppelt ist,
- Figur 2: eine perspektivische Schrägansicht der Anhängekupplung von hinten oben,
- Figur 3: eine Querschnittsansicht einer zweiten Anhängekupplung, an die eine Zugkupplung angekuppelt ist,
- Figur 4: eine perspektivische Schrägansicht der Anhängekupplung gemäß Figur 3 mit einem angekuppelten Lastenträger,
- Figur 5: eine perspektivische Schrägansicht einer dritten Anhängekupplung,
- Figur 6: eine perspektivische Schrägansicht einer vierten Anhängekupplung, und
- Figur 7: ein Blockschaltbild eines Steuergeräts gemäß der Erfindung.

Eine Anhängekupplung 10a ist an einem Zugfahrzeug 12 befestigt, beispielsweise einem Querträger. An einem Kupplungsarm 13a der Anhängekupplung 10a sind hierfür beispielsweise Bohrungen 14 vorgesehen, wobei eine bewegliche Lagerung, insbesondere eine Dreh- und/oder Schiebelagerung, des Kupplungsarms 13a bezüglich des Zugfahrzeugs 12 auch möglich ist, z.B. anhand einer geeigneten Lagereinrichtung. Der Kupplungsarm 13a steht nach hinten vor einen Stoßfänger 11 des Zugfahrzeuges 12 vor. Der Kupplungsarm 13a trägt an seinem freien Ende einen Kuppelkörper 15a, der vorliegend eine kugelige Gestalt hat. Dementsprechend kann eine Zugkupplung 16 eines Anhängers 17 mit ihrer Zugkupplungsaufnahme 18 auf den kugeligen Kuppelkörper 15a aufgesetzt werden.

Die Zugkupplung 16 ist an einem freien Ende einer Deichsel 19 des Anhängers 17 angeordnet und mittels eines Schwenkhebels 20 betätigbar. Wenn der an um eine Schwenkachse 24 schwenkbar gelagerte Schwenkhebel 20 in die Schließstellung, das heißt in Richtung der Deichsel 19 bewegt wird, betätigt er in an sich bekannter Weise einen Haltebacken 21 in Richtung einer Kugeloberfläche 23 des Kuppelkörpers 15a. Somit liegt also eine Innenfläche 22 der Zugkupplungsaufnahme 18 an der Kugeloberfläche 23 an. Der Kuppelkörper 15a ist zweckmäßigerweise feststehend bezüglich des Kupplungsarms 13a, zumindest drehfest, so dass die Zugkupplungsaufnahme 18 an der Kugeloberfläche 23 in bekannter Weise außenseitig entlang gleitet.

Der Kuppelkörper 15a hat an seiner Oberseite eine Abflachung 25. Der Kupplungsarm 13a weist einen Armabschnitt 26 auf, auf dem der Kuppelkörper 15a angeordnet ist. Der Armabschnitt 26 befindet sich an einem freien Endbereich eines Armabschnitts 27 des Kupplungsarms 13a. Der Armabschnitt 27, der Armabschnitt 26 und der Kuppelkörper 15a sind zweckmäßigerweise einstückig.

Eine Sensoraufnahme und ein darin angeordneter Drehwinkelsensor 31a befinden sich in einem äquatorialen Bereich des Kuppelkörpers 15a. Am Kuppelkörper 15a, ebenfalls im Bereich der Äquatoriallinie, befindet sich weiterhin ein Mitnehmerkörper 33, der in einer Lageraufnahme 34 des Kuppelkörpers 15a drehbar gelagert ist (Pfeil 36). Der Mitnehmerkörper 33 ist ringförmig, d.h. er ist als ein Ring ausgestaltet. Der Mitnehmerkörper 33 ist magnetisch oder in dem Mitnehmerkörper 33 sind Magnete aufgenommen, deren Magnetfeld den Drehwinkelsensor 31a erregt bzw. beaufschlagt. Ändert sich nunmehr die Winkelposition der Magnete relativ zum Drehwinkelsensor 31a, erzeugt dieser ein Winkelsignal, das die Winkelstellung des Mitnehmerkörpers 33 relativ zum Drehwinkelsensor 31a repräsentiert. Da der Drehwinkelsensor 31a bezüglich des Kuppelkörpers 15a ortsfest ist, signalisiert und identifiziert das Winkelsignal, das der Drehwinkelsensor 31a erzeugt, zugleich eine Winkelstellung des Mitnehmerkörpers 33 relativ zum Kuppelkörper 15a.

Der Mitnehmerkörper 33 wird von der Zugkupplung 16 mitgenommen, wenn diese an der Anhängekupplung 10a montiert ist, d.h. der Kuppelkörper 15a im Innenraum der Zugkupplungsaufnahme 18 angeordnet ist. Wenn also nunmehr der Anhänger 17 seine Drehposition oder Drehwinkelstellung relativ zum Zugfahrzeug 12 bzw. zur Anhängekupplung 10a verändert, nimmt er den Mitnehmerkörper 33 mit. Dadurch ändert eine Relativposition eines Magnetfeldes, das die Magnete des Mitnehmerkörpers 33 erzeugen, relativ zum Drehwinkelsensor 31a. Der Drehwinkelsensor 31a kann somit die Winkelstellung des Mitnehmerkörpers 33 relativ zum Kuppelkörper 15a, entsprechend also auch die Winkelstellung des Anhängers 17 relativ zum Zugfahrzeug 12, ermitteln. An einem radialen Außenumfang des Mitnehmerkörpers 33 befinden sich Mitnahmevorsprünge 35. Die Zugkupplungsaufnahme 18 liegt an den Mitnahmevorsprüngen 35 an.

Die von dem Drehwinkelsensor 31a erzeugten Signale werden über eine nicht dargestellte Leitung, die im Kanal 37 verläuft, zu einem Steuergerät 50a an der Unterseite 29 des Kupplungsarms 13a übertragen. Das Steuergerät 50a ist beispielsweise über eine Leitung 51 mit einem Bordnetz 52 des Zugfahrzeugs 12 verbunden, zum Beispiel um das Signal oder das ausgewertete Signal des Drehwinkelsensors 31a an das Bordnetz 52 zu übertragen.

Bei der Anhängekupplung 10b sind Komponenten wie bei der Anhängekupplung 10a vorhanden, die nicht im Einzelnen erläutert werden und insbesondere aus diesem Grund auch dieselben Bezugsziffern haben. Teilweise sind jedoch auch abweichende Komponenten vorhanden, die nachfolgend erläutert werden.

Am Kupplungsarm 13b ist beispielsweise ein mittels einer Lageranordnung 43 drehbar gelagerter Kuppelkörper 15b angeordnet. Der Kuppelkörper 15b ist mit einem oberen Ende einer Drehwelle 42 verbunden, die einen hoch stehenden Armabschnitt 26 des Kupplungsarms 13b durchsetzt. Mittels eines Pfeils 44 sind die Drehbarkeit der Drehwelle 42 und des Kuppelkörpers 15b um eine Drehachse 45 angedeutet. Die Lageranordnung 43 ist in einer Lageraufnahme innen am Kuppelkörper 15b vorgesehen, so dass sie direkt zwischen dem oberen Endbereich des Armabschnitts 26 und dem Kuppelkörper 15b angeordnet ist. Die Drehwelle 42 überträgt die jeweilige Drehwinkelstellung des Kuppelkörpers 15b durch den Armabschnitt 26 hindurch nach unten, wo ein Steuergerät 50b angeordnet ist. Bei der Anhängekupplung 10b dreht also die Zugkupplung 16 den Kuppelkörper 15b, wobei die jeweilige Drehwinkelstellung über die Drehwelle 42 sozusagen nach unten zur weiteren Bearbeitung und Auswertung übertragen wird. An der Drehwelle 42 ist beispielsweise ein Drehwinkelsensor 31b angeordnet, der in Abhängigkeit von der Winkelstellung der Drehwelle 42 ein Drehwinkel-Signal generiert, das das Steuergerät 50b an das Bordnetz 52 übermittelt, beispielsweise über eine in der Zeichnung nicht dargestellte Leitung 51.

An der Drehwelle 42 ist noch eine Bremseinrichtung 30 angeordnet, die von dem Steuergerät 50b ansteuerbar ist, um die Drehwelle 42 und somit auch den Kuppelkörper 15b zu bremsen, z.B. induktiv und/oder mittels Reibung oder dergleichen. Dies kann beispielsweise zur Fahrstabilität des Gespanns bestehend aus Zugfahrzeug 12 und Anhängers 17 dienen, aber auch in besonderer Weise dazu, dass beispielsweise ein Lastenträger 90 unverdrehbar von der Anhängekupplung 10b gehalten werden kann. Die Bremseinrichtung 30 kann auch eine Verriegelung, z.B. einen Verriegelungsbolzen oder dergleichen anderen den Kuppelkörper 15b oder die Drehwelle 42 blockierenden Körper, umfassen

Der Lastenträger 90 umfasst ein Gestell 91, das beispielsweise mit einer Klemmeinrichtung 92 oder einer sonstigen Befestigungseinrichtung am Kuppelkörper 15b befestigbar ist. An dem Gestell 91 sind Halteelemente 93 vorhanden, beispielsweise ein U-Bügel 94 sowie schwenkbare Tragerinnen 95, auf die Fahrräder oder andere Lasten abgestellt werden können. An der Rückseite des Lastenträgers 90 sind noch in an sich bekannter Weise Leuchten 96 vorhanden.

An dem Anhänger 17 ist beispielsweise ein RFID-Transponder 39a angeordnet, während der Lastenträger 90 einen anderen RFID-Transponder 39b aufweist. Die RFID-Transponder 39a und 39b weisen unterschiedliche Identifikationskennungen 70 und 71 auf, so dass das Steuergerät 50a oder 50b anhand der Identifikationskennung 70 oder 71 erkennen kann, ob der Anhänger 17 oder der Lastenträger 90 an die jeweilige Anhängekupplung 10a oder 10b angekuppelt ist. Die Steuergeräte 50a und 50b weisen eine RFID-Leseeinrichtung 38 auf, mit denen sie mit dem RFID-Transponder 39 kommunizieren können.

Die RFID-Leseeinrichtung 38 ist zweckmäßigerweise direkt am Kupplungsarm 13a oder 13b, besonders bevorzugt am Kuppelkörper 15a oder 15b angeordnet, so dass die Kommunikation mit dem RFID-Transponder 39 möglichst störungsfrei geschehen kann.

Beispielsweise ist nämlich der RFID-Transponder 39a oben vorn, oberhalb der Zugkupplungsaufnahme 18, oder in derselben, angeordnet. Es ist möglich, dass der Transponder 39a direkt in das Material der Zugkupplungsaufnahme 18 bzw. der Zugkupplung 16 eingegossen ist oder in eine dort vorhandene Ausnehmung eingesetzt bzw. eingelegt ist.

Vorzugsweise befindet sich die RFID-Leseeinrichtung 38 direkt oben am Scheitelpunkt bzw. der Abflachung der Kupplungskugel bzw. des Kuppelkörpers 15.

Selbstverständlich kann auch bei der Klemmeinrichtung 92 eine Anordnung des RFID-Transponders 39b nahe bei dem zu klemmenden Kuppelkörper oder Kugelkopfes vorgesehen sein, beispielsweise an einer Innenseite einer Klemmaufnahme der Klemmeinrichtung 92. Wenn jedoch beispielsweise einer Funkübertragung nichts im Wege steht, das heißt dass beispielsweise eine Kupplungs-Aufnahme der Klemmeinrichtung 92 entsprechende Durchbrüche hat, kann der Transponder 39b selbstverständlich auch an anderer Stelle, d.h. etwas weiter entfernt von dem zu klemmenden Kuppelkörper, angeordnet sein.

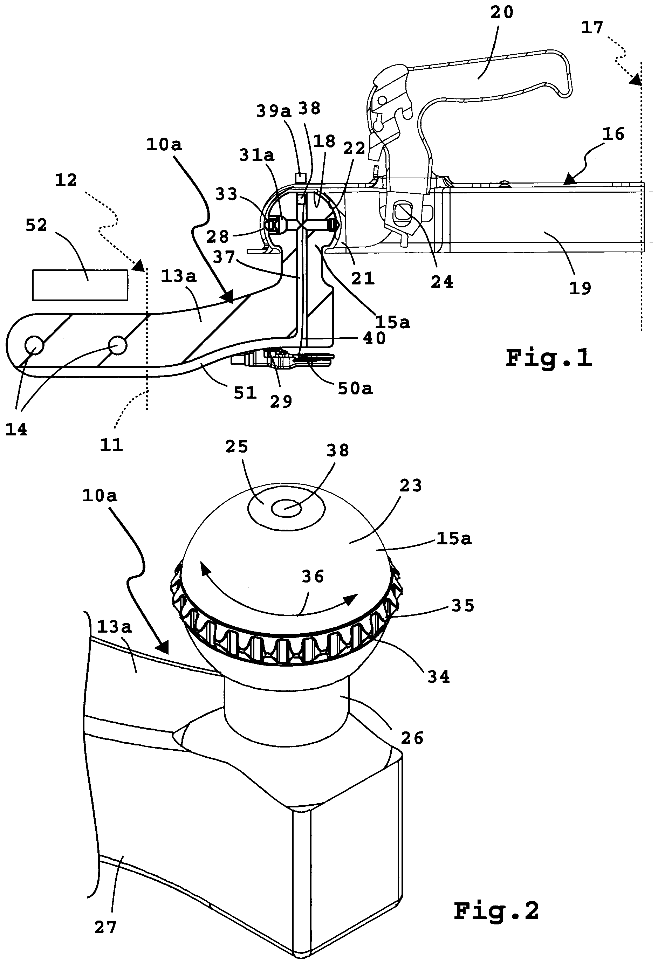

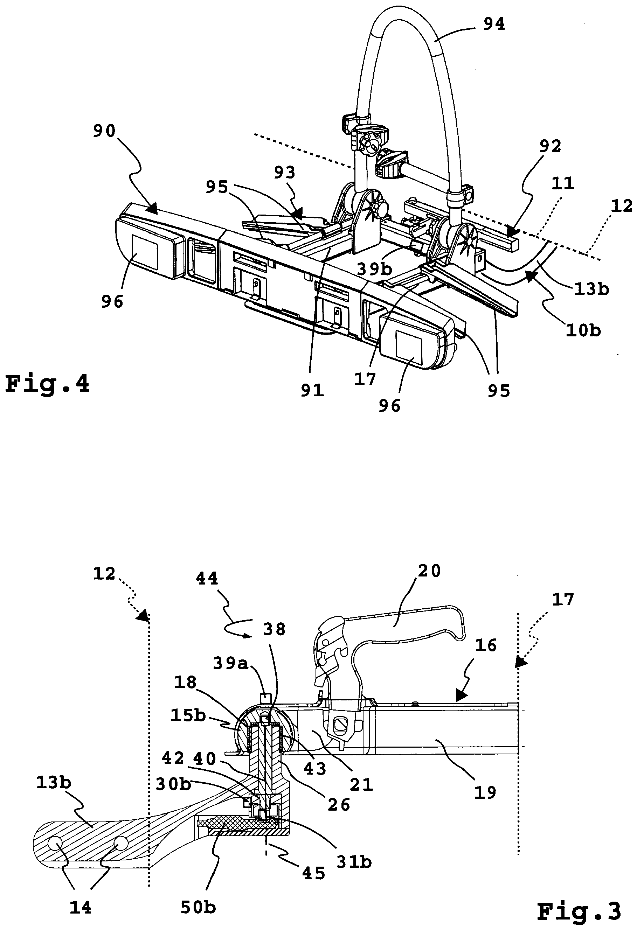

Die RFID-Leseeinrichtung 38 ist über eine Leitung 40 mit dem Steuergerät 50a oder dem Steuergerät 50b verbunden. Vorzugsweise ist vorgesehen, dass die RFID-Leseeinrichtung 38 also bei der in Figur 1 oder Figur 3 dargestellten Ausgestaltung des erfindungsgemäßen Steuergeräts eine separate, relativ frei positionierbare Baueinheit bildet.

Das Steuergerät 50a, 50b versorgt die RFID-Leseeinrichtungen 38 mit elektrischer Energie.

Die RFID-Transponder 39a und 39b kommen ohne eigene Energieversorgung in an sich bekannter Weise aus.

In Abhängigkeit von den Identifikationskennungen 71 oder 71 modifiziert beispielsweise eine Auswerteeinrichtung 77 der Steuergeräte 50a oder 50b Signale der Drehwinkelsensoren 31a oder 31b, bevor sie diese Signale an das Bordnetz 52 weiter meldet. Befindet sich beispielsweise der Lastenträger 90 an dem Kuppelkörper 15a oder 15b, filtert die Auswerteeinrichtung 77 das jeweilige Drehwinkelsignal oder blockieren dessen Weiterleitung an das Bordnetz 52. Das Drehwinkelsignal kann jedoch auch als Warnsignal genutzt werden, d.h. dass beispielsweise die Auswerteeinrichtung 77 bei einer unerwünschten Verdrehung des Lastenträgers 90 um eine Hochachse, so dass dieser schräg zur Karosserie des Zugfahrzeugs 12 steht, eine Warnung an das Bordnetz 52 ausgibt.

Das Steuergerät 50b hat noch einen Steuerausgang 68, über den es die Bremseinrichtung 30 ansteuert. Erkennt das Steuergerät 50b das Vorhandensein des Lastenträgers 90 am Kuppelkörper 15b, steuert es die Bremseinrichtung 30 beispielsweise zu einer Blockierung des Kuppelkörpers 15b relativ zum Kupplungsarm 13b an, so dass der Lastenträger 90 unverdrehbar von der Anhängekupplung 10b gehalten wird.

Wenn jedoch beispielsweise der Anhänger 17 angekuppelt ist und die Leseeinrichtung 38 die Identifikationskennung 70 an das Steuergerät 50b meldet, steuert dieses die Bremseinrichtung 30 zu einer Freigabe der Drehbewegung des Kuppelkörpers 15b an oder, beispielsweise bei einer unerwünscht starken Verdrehung, die anhand des Drehwinkelsignals erkennbar ist, zu einem Bremsen des Kuppelkörpers 15b.

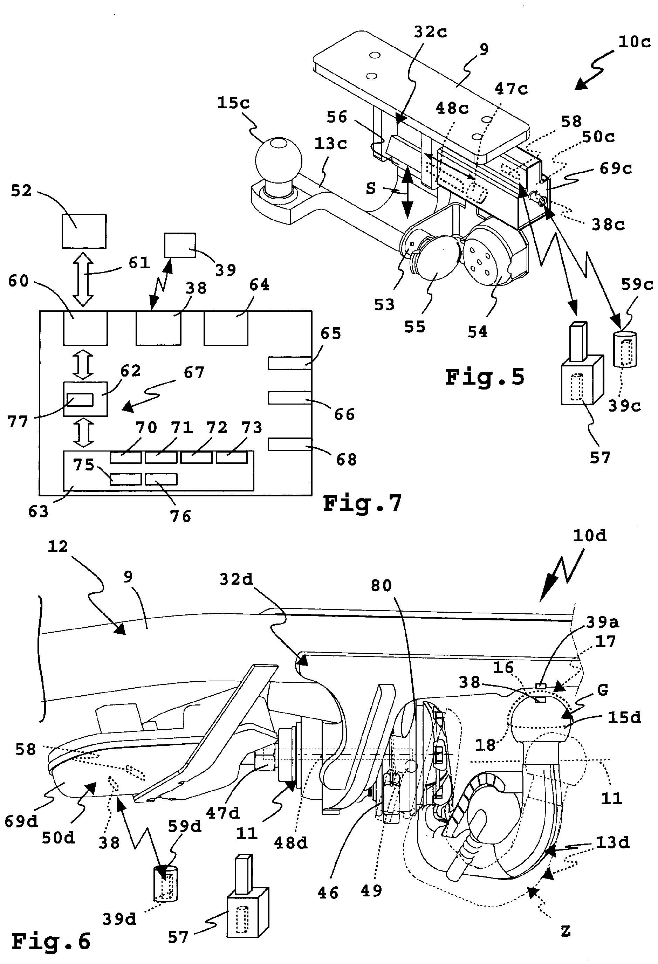

Bei den Anhängekupplungen 10c und 10d sind teilweise gleiche oder ähnliche Komponenten wie bei den vorher erläuterten Anhängekupplungen vorhanden, die dementsprechend dieselben oder ähnliche Bezugszeichen tragen. An beispielsweise einem Querträger 9 oder sonstigen Haltemitteln ist bei den Anhängekupplungen 10c und 10d eine Halterung 32c und 32d angeordnet, wobei die Halterung 32c eine Steckaufnahme 56 für ein Steckende eines Kupplungsarms 13c aufweist, so dass der Kupplungsarm 13c lösbar an der Halterung 32c befestigbar ist, während bei der Halterung 32d eine bewegliche Lagerung des Kupplungsarms 13d, z.B. ein kugellagerartiges Lager 80, ein Schwenk-Schiebe-Lager oder dergleichen, vorgesehen ist, so dass der Kupplungsarm 13d zwischen einer in durchgezogenen Linien dargestellten Gebrauchsstellung G und einer hinter den Stoßfänger 11 zurück verstellten Nichtgebrauchsstellung verstellbar ist. In Figur 6 ist eine zwischen diesen beiden Stellungen liegende Zwischenstellung Z eingezeichnet.

Der Kupplungsarm 13d ist beispielsweise um eine oder mehrere Schwenkachsen schwenkbar und/oder um eine Schiebeachse verschieblich gelagert.

Der Kupplungsarm 13c kann entlang einer Schiebeachse oder Steckachse S in die Steckaufnahme 56 eingesteckt bzw. aus dieser entnommen werden.

Der Kupplungsarm 13d kann mittels eines Stellantriebs 46 zwischen der Gebrauchsstellung G und der Nichtgebrauchsstellung motorisch verstellt werden. Eine manuelle Verstellung ist möglich.

Die Kupplungsarme 13c und 13d haben an ihren freien Enden Kuppelkörper 15c und 15d. Die Kupplungsarme 13c und 13d sind mittels Verriegelungseinrichtungen zumindest in ihrer jeweiligen Gebrauchsstellung verriegelbar. Diese Verriegelung geschieht vorliegend mittels Verriegelungsantrieben 47c und 47d, die in Richtung einer Verriegelungsstellung wirken können, zweckmäßigerweise jedoch im Prinzip so genannte Entriegelungsantriebe sind.

Durch die Verriegelungsantriebe 47c und 47d betätigte Verriegelungselemente, zum Beispiel Verriegelungsbolzen 48c und 48d, sind vorteilhaft durch Federkraft in Richtung ihrer jeweiligen Verriegelungsstellung beaufschlagt, so dass beispielsweise der Verriegelungsbolzen 48c in eine korrespondierende Aufnahme am Steckende des Kupplungsarms 13c eingreift und diesen so an der Halterung 32c verriegelt oder der Verriegelungsbolzen 48d Formstücke 49 in korrespondierende Aufnahmen an einem Lagerteil des Kupplungsarms 13d im Sinne eines Verriegelns drückt. Die Verriegelungsantriebe 47c und 47d wirken sozusagen in die Gegenrichtung, d.h. im Sinne eines Entriegelns entgegen der Federkraft von Federanordnungen, so dass die Verriegelungsbolzen 48c und 48d die Kupplungsarme 13c und 13d freigeben.

Beispielsweise kann der Verriegelungsantrieb 47c durch einen Schalter 53 betätigt werden, zum Beispiel einen elektrischen Drucktaster. Der Schalter 53 ist jedoch durch einen Deckel 55 einer Steckdose 54 verdeckt, wenn in diese Steckdose 54 ein Stecker eingesteckt ist. Alternativ ist es möglich, den Verriegelungsantrieb 47c durch ein drahtloses Bediengerät, z.B. einen Sender-Schalter 57, zu betätigen.

Mit dem Sender-Schalter 57 ist aber auch der Verriegelungsantrieb 47d betätigbar, vorzugsweise auch der Stellantrieb 46.

Die Steuergeräte 50c und 50d weisen jeweils einen Empfänger 58 auf, mit dem sie die Signale des Schalters 57 empfangen können, also drahtlos bedienbar sind, z.B. über Funk oder Infrarot.

Es könnte durch eine unautorisierte Betätigung der Verriegelungsantriebe 47c oder 47d und/oder des Stellantriebs 46, beispielsweise mittels des Sende-Schalters 47 oder des im Außenbereich angeordneten, frei zugänglichen Schalters 53 Missbrauch getrieben werden. Dagegen sind die folgenden Maßnahmen getroffen:
Die Steuergeräte 50c und 50d haben jeweils eine RFID-Leseeinrichtung 38, die zweckmäßigerweise an Bord der Steuergeräte 50c oder 50d angeordnet ist, zweckmäßigerweise innerhalb eines Gehäuses 69c oder 69d. Mit der RFID-Leseeinrichtung 38 können die Steuergeräte 50c und 50d mit z.B. in Schlüsselanhängern 59c und 59d oder an dem Schalter 57 angeordneten RFID-Transponder 39c und 39d kommunizieren und darin enthaltene Identifikationskennungen 72 und 73 auslesen.

Wenn also das Steuergerät 50c die Identifikationskennung 72 erkennt, gibt es den Schalter 53 oder den Sende-Schalter 57 zum Schalten des Verriegelungsantriebs 47c frei, zweckmäßigerweise für ein Zeitfenster von beispielsweise 1s bis 10s. Dann kann beispielsweise durch Drücken des Schalters 53 die Verriegelung des Kupplungsarms 13c gelöst werden.

Wenn das Steuergerät 50d die Identifikationskennung 73 erkennt, lässt es ein Schalten des Verriegelungsantriebs 47d und des Stellantriebs 46 mit dem Schalter 57 zu. Dann gibt das Steuergerät 50d beispielsweise Stellsignale über einen dem Stellantrieb 46 zugeordneten Steuerausgang oder Schaltausgang 65 und Stellsignale für den Verriegelungsantrieb 47d über einen Schaltausgang 66 aus. Die Schaltausgänge 65, 66 umfassen vorzugsweise Leistungstransistoren und/oder eine Endstufe.

Im Zusammenhang mit Figur 7 wird ein Beispiel eines exemplarisch für die Steuergeräte 50a-50d stehenden Steuergerätes 50 erläutert. Das Steuergerät 50 umfasst beispielsweise einen Prozessor 62, der zur Verarbeitung von Software-Befehlen ausgestaltet ist. Eine entsprechende Steuersoftware, die z.B. die Auswerteeinrichtung 77 teilweise bildet, ist beispielsweise in einem Speicher 63 gespeichert. Auch die Auswertung und Bearbeitung der Identifikationskennungen 70-73 kann über eine Software realisiert sein, so dass der Prozessor 62 beispielsweise einen Bestandteil von Auswertemitteln 67 zur Auswertung der mindestens einen Identifikationskennung 70-73 bildet.

Die Steuersoftware ist zweckmäßigerweise parametrierbar oder in das Steuergerät 50 ladbar, zum Beispiel über einen Parametriereingang 64. Der Parametriereingang 64 kann z.B. eine USB-Schnittstelle umfassen.

Aber auch andere Daten, die in dem Speicher 63 abgelegt sind, sind zweckmäßigerweise über den Parametriereingang 64 veränderbar, z.B. den Identifikationskennungen 70, 71 zugeordnete Informationen 75 und 76. Auch die Identifikationskennungen 70-73 an sich sind zweckmäßigerweise über den Parametriereingang 64 veränderbar.

Über einen Datenausgang 60, der beispielsweise einen Bus-Koppler umfasst, kann das Steuergerät 50 mit dem Bordnetz 52 kommunizieren. Über den Datenausgang 60 sendet das Steuergerät 50 ein Meldesignal 61, das beispielsweise eine der Identifikationskennungen 70-73 umfasst oder durch die Identifikationskennung 70-73 gebildet ist.

Zweckmäßigerweise sendet das Steuergerät 50 jedoch ein quasi angereichertes Meldesignal 61, beispielsweise die Identifikationskennung 70 erweitert um eine Information 75, die in dem Speicher 63 gespeichert und der Identifikationskennung 70 zugeordnet ist. Somit kann das Steuergerät 50 beispielsweise dem Anhänger 17 zugeordnete Daten, beispielsweise dessen maximale zulässiges Gesamtgewicht, in dem Meldesignal 61 an das Zugfahrzeug 12 übertragen. Dem Lastenträger 90 hingegen ist die Identifikationskennung 71 zugeordnet. Zur Identifikationskennung 71 sind Informationen 76 gespeichert, beispielsweise die Maße des Lastenträgers 90. Erhält ein Parkassistenzsystem mit an der Rückseite, zum Beispiel dem Stoßfänger 11, angeordnete Parksensoren ein entsprechendes Meldesignal 61, kann es entsprechend den geometrischen Abmessungen des Lastenträgers 90 arbeiten.

Bei dem in Figur 6 dargestellten Ausführungsbeispiel ist zudem noch ein automatisches Ankuppeln der Anhängekupplung an die Zugkupplung 16 dargestellt. Beispielsweise erkennt die Leseeinrichtung 38 den insbesondere oben an der Zugkupplungsaufnahme 18, insbesondere deren Innenraum, angeordneten RFID-Transponder 39a und ermittelt so die Position der Kupplungsaufnahme 18. Das Steuergerät 50d steuert dann den Stellantrieb 46, der zum Verstellen des Kupplungsarms 13 dient, so an, dass er den Kuppelkörper 15d in die Kupplungsaufnahme 18 hinein positioniert. Somit bildet der Stellantrieb 46 einen Positionierantrieb oder eine Positionierantriebanordnung. Zweckmäßigerweise kann der Kupplungsarm 13 anhand der Lageranordnung 80 auch im Bereich der Gebrauchsstellung G weiter verstellt werden, z.B. nach oben und/oder seitlich zur Gebrauchsstellung G.

Ein Positionierantrieb einer erfindungsgemäßen Anhängekupplung kann auch mehrere Motoren, vorteilhaft mindestens ein Getriebe oder dergleichen umfassen.

Hierbei ist es vorteilhaft, dass der Kupplungsarm 13d an dem fahrzeugseitigen Halter mehrachsig, insbesondere kugelig, kardanisch oder dergleichen gelagert ist, so dass der Kuppelkörper 15d relativ frei im Raum und in die Zugkupplungsaufnahme 18 hinein bewegt werden kann.

Auch in der Gebrauchsstellung G ist der Kupplungsarm 13d durch die Lageranordnung 80 noch beweglich, z.B. nach oben oder seitlich zur Gebrauchsstellung G.

## Patentansprüche

1. Steuergerät (50a-50d) für eine Anhängekupplung (10a-10d) für ein Zugfahrzeug (12), insbesondere einen Personenkraftwagen, wobei die Anhängekupplung (10a-10d) einen Kupplungsarm (13a-13d) zum Anhängen eines Anhängers (17) oder zum Halten eines Lastenträgers (90) aufweist, wobei das Steuergerät (50a-50d) eine Leseeinrichtung (38) zur Kommunikation mit einem insbesondere an einer Kupplung des Anhängers (17) oder des Lastenträgers (90) angeordneten RFID-Transponder (39a-39d), in dem mindestens eine Identifikationskennung (70-73) gespeichert ist, und Auswertemittel (67) zur Auswertung der mindestens einen Identifikationskennung (70-73) aufweist, **dadurch gekennzeichnet, dass** es einen Schaltausgang (65, 66) zum Schalten eines zum Verriegeln des Kupplungsarms (13a-13d) vorgesehenen Verriegelungsantriebs (47c; 47d) und/oder eines zum Verstellen des Kupplungsarms (13a-13d) vorgesehenen Stellantriebs (46) der Anhängekupplung (10a-10d) in Abhängigkeit von der mindestens einen Identifikationskennung (70-73) aufweist, und dass das Steuergerät (50a-50d) durch einen insbesondere drahtlosen Schalter (53, 57) betätigbar ist, um den Verriegelungsantrieb (47c; 47d) und/oder den Stellantrieb (46) zu steuern, und bei dem die Auswertemittel (67) in Abhängigkeit von einem Erkennen des RFID-Transponders (39a-39d), insbesondere einem Erkennen der Identifikationskennung (70-73) des RFID-Transponders (39a-39d), ein Freigabesignal zur Freigabe einer Betätigung des Verriegelungsantriebs (47c; 47d) und/oder des Stellantriebs (46) erzeugen.

2. Steuergerät nach Anspruch 1, **dadurch gekennzeichnet, dass** es einen Datenausgang (60) zur Ausgabe eines die mindestens eine Identifikationskennung (70-73) enthaltenden oder in Abhängigkeit von der mindestens einen Identifikationskennung (70-73) erzeugten Meldesignals (61) aufweist.

3. Steuergerät nach Anspruch 2, **dadurch gekennzeichnet, dass** der Datenausgang (60) eine Bordnetz-Schnittstelle, insbesondere eine Bus-Schnittstelle, zur Verbindung mit einem Bordnetz (52) des Zugfahrzeugs (12) umfasst.

4. Steuergerät nach Anspruch 2 oder 3, **dadurch gekennzeichnet, dass** das Meldesignal (61) eine Information über den Anhänger (17) oder den Lastenträger (90) umfasst, insbesondere dessen Gewicht, dessen Länge, dessen Breite, eine Anzahl von Achsen des Anhängers (17), dessen maximale Last, umfasst.

5. Steuergerät nach einem der vorhergehenden Ansprüche, **dadurch gekennzeichnet, dass** es einen Speicher (63) aufweist, in dem der mindestens einen Identifikationskennung (70-73) zugeordnete Informationen (75, 76) abgelegt sind, und dass es zur Erzeugung eines Meldesignals (61) und/oder eines Steuersignals in Abhängigkeit von der mindestens einen Identifikationskennung (70-73) und mindestens einer in dem Speicher (63) abgelegten Information (75, 76) ausgestaltet ist.

6. Steuergerät nach einem der vorhergehenden Ansprüche, **dadurch gekennzeichnet, dass** es einen Parametriereingang (64) zur Parametrierung, insbesondere zur Eingabe von in dem oder einem Speicher (63) abzulegenden, der mindestens einen Identifikationskennung (70-73) zugeordneten Informationen (75, 76), aufweist.

7. Steuergerät nach einem der vorhergehenden Ansprüche, **dadurch gekennzeichnet, dass** der Schaltausgang (65, 66) drahtlos betätigbar ist.

8. Steuergerät nach einem der vorhergehenden Ansprüche, **dadurch gekennzeichnet, dass** es einen Bestandteil eines Systems bildet, bei dem der RFID-Transponder (39a-39d) an einem Schlüsselanhänger (59) für einen Fahrzeug-Schlüssel oder an einem Fahrzeug-Schlüssel für das Zugfahrzeug (12) angeordnet ist, und/oder dass das Steuergerät (50a-50d) bei einem Erkennen der Identifikationskennung (70-73) des RFID-Transponders (39a-39d) für eine vorbestimmte oder einstellbare Zeitspanne bei einer Betätigung des Schalter (53, 57) den Verriegelungsantrieb (47c; 47d) und/oder den Stellantrieb (46) zu einer Verstellbewegung ansteuert.

9. Steuergerät nach einem der vorhergehenden Ansprüche, **dadurch gekennzeichnet, dass** es eine Auswerteeinrichtung (77) für ein Sensorsignal aufweist, insbesondere für ein Drehwinkelsensorsignal (31a, 31b) eines Drehwinkelsensors (31a, 31b), der zur Erfassung einer Winkelstellung des Anhängers (17) relativ zu dem Kupplungsarm (13a-13d) bzw. dem Zugfahrzeug (12) vorgesehen ist, und dass es zur Ausgabe und/oder Modifikation des Sensorsignals oder eines anhand des Sensorsignals erzeugten Signals in Abhängigkeit von der mindestens einen Identifikationskennung (70-73) ausgestaltet ist.

10. Steuergerät nach einem der vorhergehenden Ansprüche, **dadurch gekennzeichnet, dass** es einen Steuerausgang (68) zum Ansteuern einer Bremseinrichtung (30) oder Blockiereinrichtung zum Bremsen oder Blockieren einer Relativbewegung einer an den Kupplungsarm (13a-13d) angreifenden Last, insbesondere eines Lastenträgers (90), relativ zu dem Kupplungsarm (13a-13d) aufweist, und dass sie die Bremseinrichtung (30) oder Blockiereinrichtung zum Bremsen oder Blockieren in Abhängigkeit von der mindestens einen Identifikationskennung (70-73) ansteuert, insbesondere wenn die Identifikationskennung (70-73) einem Lastenträger (90) zugeordnet ist, wobei die Bremseinrichtung (30) oder Blockiereinrichtung zweckmäßigerweise zum Bremsen einer Drehbewegung eines an dem Kupplungsarm (13a-13d) zum Anhängen des Anhängers (17) vorgesehenen Kuppelkörpers (15a-15d) relativ zu dem Kupplungsarm (13a-13d) vorgesehen ist.

11. Steuergerät nach einem der vorhergehenden Ansprüche, **dadurch gekennzeichnet, dass** es, insbesondere die Leseeinrichtung (38), anhand der Kommunikation mit dem an der Kupplung, insbesondere der Kupplungsaufnahme (18), des Anhängers (17) angeordneten RFID-Transponder (39a-39d) zur Erzeugung einer die Position der Kupplungsaufnahme (18) repräsentierenden Positionsinformation und zum Ansteuern einer Positionierantriebsanordnung anhand der Positionsinformation ausgestaltet ist, die zur Positionierung des mindestens einen Kupplungsarms (13a-13d) in einer Kupplungsaufnahme (18) des Anhängers (17) vorgesehen ist.

12. Anhängekupplung (10a-10d) mit einem Steuergerät (50a-50d) nach einem der vorhergehenden Ansprüche, wobei die Anhängekupplung (10a-10d) einen Kupplungsarm (13a-13d) zum Anhängen eines Anhängers (17) oder zum Halten eines Lastenträgers (90) aufweist.

13. Anhängekupplung nach Anspruch 12, **dadurch gekennzeichnet, dass** der Kupplungsarm (13d) mittels einer Lageranordnung (80) an einer an einem Kraftfahrzeug angeordneten oder anordenbaren Halterung beweglich gelagert ist, wobei der Kupplungsarm (13d) in einer Gebrauchsstellung (G) nach hinten vor das Kraftfahrzeug zum Ankuppeln des Anhängers vorsteht, dass die Lageranordnung im Bereich der Gebrauchsstellung (G) mindestens einen Schwenkfreiheitsgrad und/oder mindestens einen Linear-Verstellfreiheitsgrad zu einer Verstellung des Kupplungsarms (13d) zu einer Positionierung des Kuppelkörpers zu der Kupplungsaufnahme aufweist, und dass sie eine Positionierantriebanordnung zum Antreiben des Kupplungsarms und Positionieren des Kuppelkörpers in die Kupplungsaufnahme des Anhängers aufweist.

14. Anhängekupplung nach Anspruch 12 oder 13, **dadurch gekennzeichnet, dass** die RFID-Leseeinrichtung (38) an oder in einem an dem Kupplungsarm (13a-13d) zum Anhängen des Anhängers (17) vorgesehenen Kuppelkörper (15a-15d) oder an einer den Kupplungsarm (13a-13d) haltenden Halterung (32c, 32d) angeordnet ist.

## Claims

1. Control unit (50a-50d) for a trailer coupling (10a-10d) for a towing vehicle (12), in particular a car, wherein the trailer coupling (10a-10d) has a coupling arm (13a-13d) for attaching a trailer (17) or for holding a load carrier (90), wherein the control unit (50a-50d) has a reader (38) for communication with an RFID transponder (39a-39d), in particular mounted on a coupling of the trailer (17) or the load carrier (90) and in which at least one identification code (70-73) is stored, and evaluation means (67) for evaluation of the identification code or codes (70-73), **characterised in that** it has a switching output (65, 66) for switching a locking drive (47c; 47d) provided for locking the coupling arm (13a-13d) and/or an actuator (46) of the trailer coupling (10a-10d) provided for adjustment of the coupling arm (13a-13d) depending on the identification code or codes (70-73), and that the control unit (50a-50d) may be actuated by means of a switch (53, 57), in particular wireless, in order to control the locking drive (47c; 47d) and/or the actuator (46), and in which the evaluation means (67) generate a release signal to release actuation of the locking drive (47c; 47d) and/or the actuator (46), depending on recognition of the RFID transponder (39a-39d), in particular recognition of the identification code (70-73) of the RFID transponder (39a-39d).

2. Control unit according to claim 1, **characterised in that** it has a data output (60) to output a status signal (61) containing the identification code or codes (70-73) or generated on the basis of the identification code or codes (70-73).

3. Control unit according to claim 2, **characterised in that** the data output (60) includes a vehicle electrical system interface, in particular a bus interface, for connection with a vehicle electrical system (52) of the towing vehicle (12).

4. Control unit according to claim 2 or 3, **characterised in that** the status signal (61) includes information about the trailer (17) or the load carrier (90), in particular its weight, its length, its width, number of axles of the trailer (17), its maximum load.

5. Control unit according to any of the preceding claims, **characterised in that** it has a memory (63) in which the information (75, 76) assigned to the identification code or codes (70-73) is stored, and that it is designed to generate a status signal (61) and/or a control signal on the basis of the identification code or codes (70-73) and at least one piece of information (75, 76) stored in the memory (63).

6. Control unit according to any of the preceding claims, **characterised in that** it has a parameter input (64) for parameterisation, in particular for the input of information (75, 76) assigned to the identification code or codes (70-73) into the memory (63) or into a memory (63).

7. Control unit according to any of the preceding claims, **characterised in that** the switching output (65, 66) may be actuated wirelessly.

8. Control unit according to any of the preceding claims, **characterised in that** it forms part of a system, in which the RFID transponder (39a-39d) is attached to a key attachment (59) for a vehicle key or to a vehicle key for the towing vehicle (12), and/or that the control unit (50a-50d), on recognition of the identification code (70-73) of the RFID transponder (39a-39d) and for a predetermined or settable period of time, activates the locking drive (47c; 47d) and/or the actuator (46) to make an adjustment movement, on actuation of the switch (53, 57).

9. Control unit according to any of the preceding claims, **characterised in that** it has an evaluation unit (77) for a sensor signal, in particular for a rotation angle sensor signal (31 a, 31b) of a rotation angle sensor (31a, 31b), which is provided to detect an angular position of the trailer (17) relative to the coupling arm (13a-13d) or the towing vehicle (12), and that it is designed for output and/or modification of the sensor signal or a signal generated with the aid of the sensor signal depending on the identification code or codes (70-73).

10. Control unit according to any of the preceding claims, **characterised in that** it has a control output (68) for controlling a braking device (30) or blocking device for the braking or blocking of a relative movement of a load acting on the coupling arm (13a-13d), in particular a load carrier (90), relative to the coupling arm (13a-13d), and that the braking device (30) or blocking device controls for braking or blocking depending on the identification code or codes (70-73), in particular if the identification code (70-73) is assigned to a load carrier (90), wherein the braking device (30) or blocking device is expediently provided for braking, relative to the coupling arm (13a-13d), a rotary movement of a coupling body (15a-15d) provided on the coupling arm (13a-13d) for attaching the trailer (17).

11. Control unit according to any of the preceding claims, **characterised in that** it is designed, in particular the reader (38), with the aid of the RFID transponder (39a-39d) mounted on the coupling, in particular the coupling socket (18) of the trailer (17), to generate position information representing the position of the coupling socket (18) and to control a positioning drive assembly with the aid of the position information, which is provided for positioning the coupling arm or arms (13a-13d) in a coupling socket (18) of the trailer (17).

12. Trailer coupling (10a-10d) with a control unit (50a-50d) according to any of the preceding claims, wherein the trailer coupling (10a-10d) has a coupling arm (13a-13d) for attaching a trailer (17) or for holding a load carrier (90).

13. Trailer coupling according to claim 12, **characterised in that** the coupling arm (13d) is mounted movably by means of a bearing assembly (80) on a mounting which is or may fixed to a motor vehicle, wherein the coupling arm (13d) in a position of use (G) extends rearwards beyond the motor vehicle for the attaching of the trailer, that the bearing assembly has in the area of the position of use (G) at least a degree of freedom to pivot and/or at least a linear degree of freedom to adjust, for an adjustment of the coupling arm (13d) to a positioning of the coupling body to the coupling socket, and that it has a positioning drive assembly for driving the coupling arm and positioning the coupling body in the coupling socket of the trailer.

14. Trailer coupling according to claim 12 or 13, **characterised in that** the RFID reader (38) is mounted on or in a coupling body (15a-15d) provided on the coupling arm (13a-13d) for attaching the trailer (17) or on a mounting (32c, 32d) holding the coupling arm (13a-13d).

## Revendications

1. Appareil de commande (50a-50d) pour un attelage (10a-10d) pour un véhicule tracteur (12), en particulier une voiture particulière, dans lequel l'attelage (10a-10d) présente un bras d'attelage (13a-13d) pour l'attelage d'une remorque (17) ou pour le maintien d'un support de charge (90), dans lequel l'appareil de commande (50a-50d) présente un dispositif de lecture (38) pour la communication avec un transpondeur RFID (39a-39d) agencé en particulier au niveau d'un attelage de la remorque (17) ou du support de charge (90), dans lequel au moins un identifiant (70-73) est mémorisé, et des moyens d'évaluation (67) pour l'évaluation de l'au moins un identifiant (70-73), **caractérisé en ce qu'**il présente une sortie de commutation (65, 66) pour la commutation d'un entraînement de verrouillage (47c ; 47d) prévu pour le verrouillage du bras d'attelage (13a-13d) et/ou d'un entraînement de réglage (46) de l'attelage (10a-10d) prévu pour le réglage du bras d'attelage (13a-13d) en fonction de l'au moins un identifiant (70-73), et que l'appareil de commande (50a-50d) peut être actionné par un commutateur (53, 57) en particulier sans fil, pour commander l'entraînement de verrouillage (47c ; 47d) et/ou l'entraînement de réglage (46), et dans lequel les moyens d'évaluation (67) génèrent en fonction d'une détection du transpondeur RFID (39a-39d), en particulier d'une détection de l'identifiant (70-73) du transpondeur RFID (39a-39d), un signal de libération pour la libération d'un actionnement de l'entraînement de verrouillage (47c ; 47d) et/ou de l'entraînement de réglage (46).

2. Appareil de commande selon la revendication 1, **caractérisé en ce qu'**il présente une sortie de données (60) pour la sortie d'un signal de signalisation (61) contenant l'au moins un identifiant (70-73) ou généré en fonction de l'au moins un identifiant (70-73).

3. Appareil de commande selon la revendication 2, **caractérisé en ce que** la sortie de données (60) comprend une interface de réseau de bord, en particulier une interface bus, pour la liaison à un réseau de bord (52) du véhicule tracteur (12).

4. Appareil de commande selon la revendication 2 ou 3, **caractérisé en ce que** le signal de signalisation (61) comprend une information sur la remorque (17) ou le support de charge (90), en particulier son poids, sa longueur, sa largeur, un nombre d'essieux de la remorque (17), sa charge maximum.

5. Appareil de commande selon l'une quelconque des revendications précédentes, **caractérisé en ce qu'**il présente une mémoire (63), dans laquelle des informations (75, 76) associées à l'au moins un identifiant (70-73) sont enregistrées, et qu'il est configuré pour la génération d'un signal de signalisation (61) et/ou d'un signal de commande en fonction de l'au moins un identifiant (70-73) et d'au moins une information (75, 76) enregistrée dans la mémoire (63).

6. Appareil de commande selon l'une quelconque des revendications précédentes, **caractérisé en ce qu'**il présente une entrée de paramétrage (64) pour le paramétrage, en particulier pour la saisie d'informations (75, 76) associées à l'au moins un identifiant (70-73), à enregistrer dans la ou une mémoire (63).

7. Appareil de commande selon l'une quelconque des revendications précédentes, **caractérisé en ce que** la sortie de commutation (65, 66) peut être actionnée sans fil.

8. Appareil de commande selon l'une quelconque des revendications précédentes, **caractérisé en ce qu'**il fait partie d'un système, dans lequel le transpondeur RFID (39a-39d) est agencé au niveau d'un porte-clés (59) pour une clé de véhicule ou au niveau d'une clé de véhicule pour le véhicule tracteur (12), et/ou que l'appareil de commande (50a-50d) pilote dans le cas d'une détection de l'identifiant (70-73) du transpondeur RFID (39a-39d) pour un laps de temps prédéterminé ou réglable en cas d'actionnement du commutateur (53, 57), l'entraînement de verrouillage (47c ; 47d) et/ou l'entraînement de réglage (46) pour un déplacement de réglage.

9. Appareil de commande selon l'une quelconque des revendications précédentes, **caractérisé en ce qu'**il présente un dispositif d'évaluation (77) pour un signal de capteur, en particulier pour un signal de capteur d'angle de rotation (31a, 31b) d'un capteur d'angle de rotation (31a, 31b), qui est prévu pour la détection d'une position angulaire de la remorque (17) par rapport au bras d'attelage (13a-13d) ou au véhicule tracteur (12), et qu'il est configuré pour la sortie et/ou la modification du signal de capteur ou d'un signal généré à l'aide du signal de capteur en fonction de l'au moins un identifiant (70-73).

10. Appareil de commande selon l'une quelconque des revendications précédentes, **caractérisé en ce qu'**il présente une sortie de commande (68) pour le pilotage d'un dispositif de freinage (30) ou dispositif de blocage pour le freinage ou blocage d'un mouvement relatif d'une charge venant en prise sur le bras d'attelage (13a-13d), en particulier d'un support de charge (90), par rapport au bras d'attelage (13a-13d), et qu'il pilote le dispositif de freinage (30) ou dispositif de blocage pour le freinage ou blocage en fonction de l'au moins un identifiant (70-73), en particulier lorsque l'identifiant (70-73) est associé à un support de charge (90), dans lequel le dispositif de freinage (30) ou dispositif de blocage est prévu de manière appropriée pour le freinage d'un mouvement de rotation d'un corps d'attelage (15a-15d) prévu au niveau du bras d'attelage (13a-13d) pour l'attelage de la remorque (17) par rapport au bras d'attelage (13a-13d).

11. Appareil de commande selon l'une quelconque des revendications précédentes, **caractérisé en ce qu'**il, en particulier le dispositif de lecture (38), est configuré à l'aide de la communication avec le transpondeur RFID (39a-39d) agencé au niveau de l'attelage, en particulier du logement d'attelage (18), de la remorque (17) pour la génération d'une information de position représentant la position du logement d'attelage (18) et pour le pilotage d'un ensemble d'entraînement de positionnement à l'aide de l'information de position, qui est prévu pour le positionnement de l'au moins un bras d'attelage (13a-13d) dans un logement d'attelage (18) de la remorque (17).

12. Attelage (10a-10d) avec un appareil de commande (50a-50d) selon l'une quelconque des revendications précédentes, dans lequel l'attelage (10a-10d) présente un bras d'attelage (13a-13d) pour l'attelage d'une remorque (17) ou pour le maintien d'un support de charge (90).

13. Attelage selon la revendication 12, **caractérisé en ce que** le bras d'attelage (13d) est logé de manière mobile au moyen d'un ensemble palier (80) au niveau d'un support agencé ou pouvant être agencé au niveau d'un véhicule automobile, dans lequel le bras d'attelage (13d) fait saillie du véhicule automobile pour l'attelage de la remorque vers l'arrière dans une position d'utilisation (G), que l'ensemble palier présente dans la zone de la position d'utilisation (G) au moins un degré de liberté de pivotement et/ou au moins un degré de liberté de réglage linéaire pour un réglage du bras d'attelage (13d) pour un positionnement du corps d'attelage par rapport au logement d'attelage, et qu'il présente un ensemble d'entraînement de positionnement pour l'entraînement du bras d'attelage et le positionnement du corps d'attelage dans le logement d'attelage de la remorque.

14. Attelage selon la revendication 12 ou 13, **caractérisé en ce que** le dispositif de lecture RFID (38) est agencé au niveau de, ou dans un corps d'attelage (15a-15d) prévu au niveau du bras d'attelage (13a-13d) pour l'attelage de la remorque (17) ou au niveau d'un support (32c, 32d) maintenant le bras d'attelage (13a-13d).
